# FASCICULE DE BREVET EUROPEEN

(11) **EP 3 244 543 B1**
(45) Date de publication et mention de la délivrance du brevet: **10.07.2019**
(21) Numéro de dépôt: 17170799.5
(22) Date de dépôt: 12.05.2017
(51) Int. Cl.: H04B 1/38, H04B 3/52, H01P 3/16, H01P 5/08

(54) **DISPOSITIF DE TRANSMISSION D'ONDES MILLIMÉTRIQUES**
VORRICHTUNG ZUR ÜBERTRAGUNG VON MILLIMETERWELLEN
DEVICE FOR TRANSMITTING MILLIMETRE WAVES

(30) Priorité: 13.05.2016 FR 1654300
(43) Date de publication de la demande: 15.11.2017
(73) Titulaire: Commissariat à l'Energie Atomique et aux Energies Alternatives, 75015 Paris (FR)
(72) Inventeur: BELOT, Didier, 38140 RIVES (FR); MARTINEAU, Baudouin, 38000 GRENOBLE (FR); RICHARD, Olivier, 38850 BILIEU (FR)
(74) Mandataire: Cabinet Beaumont

(56) Documents cités:
- US-A1- 2008 238 796
- US-A1- 2015 263 403
- US-A1- 2015 295 305

## Description

### Domaine

La présente demande concerne un dispositif de transmission d'ondes millimétriques et plus particulièrement un dispositif de transmission d'ondes millimétriques en un matériau diélectrique.

### Exposé de l'art antérieur

Il est connu que l'on peut transmettre des ondes millimétriques dans un guide d'onde en matière plastique diélectrique. Un avantage d'un guide d'onde en matière diélectrique est qu'il présente un coût de fabrication inférieur à celui d'un guide d'onde comprenant des éléments conducteurs.

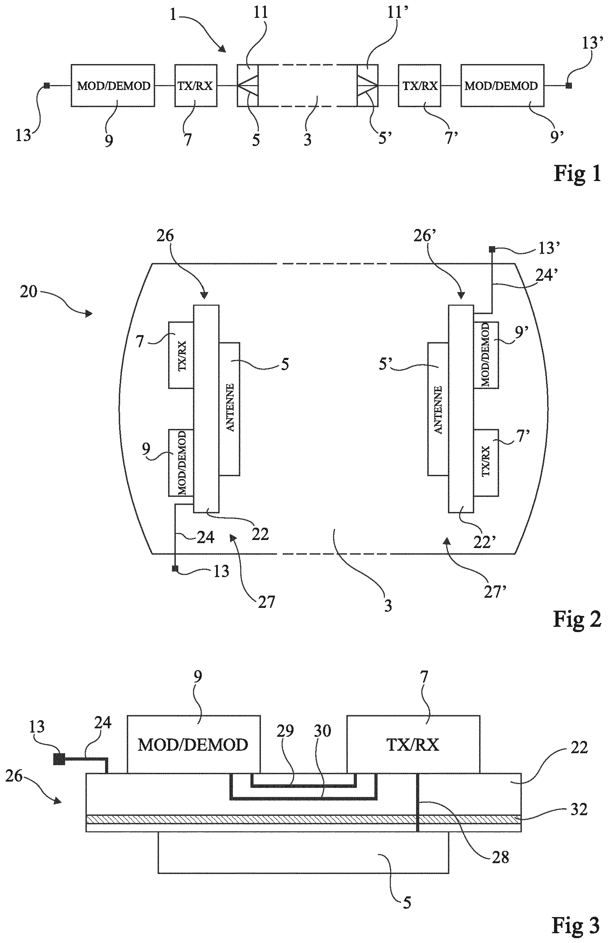

La figure 1 est un schéma représentant un système 1 de transmission d'ondes millimétriques du type décrit dans la publication intitulée "A 12.5+12.5 Gb/s Full-Duplex Plastic Waveguide Interconnect" de Satoshi Fukuda et al. (IEEE Journal of Solid-State Circuits, vol. 46, No. 12, décembre 2011). Le système de transmission d'ondes millimétriques 1 comprend un guide d'onde à section rectangulaire 3 en une matière plastique diélectrique, deux antennes 5 et 5', deux circuits d'émission-réception d'ondes millimétriques (TX/RX) 7 et 7', et deux circuits de modulation-démodulation (MOD/DEMOD) 9 et 9'.

Les antennes 5 et 5' sont formées dans des blocs respectifs 11 et 11' dont chacun est adjacent à l'une des extrémités du guide d'onde 3. Les antennes 5 et 5' sont par exemple adaptées à émettre et à recevoir des ondes millimétriques qui se propagent dans le guide d'onde 3. L'antenne 5 est connectée au circuit d'émission-réception d'ondes millimétriques 7. De même, l'antenne 5' est connectée au circuit d'émission-réception d'ondes millimétriques 7'. Le circuit d'émission-réception 7 est connecté au circuit de modulation-démodulation 9 et, de même, le circuit d'émission-réception 7' est connecté au circuit de modulation-démodulation 9'. Les circuits de modulation-démodulation 9 et 9' sont reliés respectivement à des bornes d'entrée-sortie 13 et 13'.

Les ondes millimétriques transmises par le guide d'onde 3 peuvent être modulées par un signal binaire appliqué sur la borne 13 ou 13' et démodulées en un signal binaire reçu sur la borne 13' ou 13.

Les antennes 5 et 5' et les blocs 11 et 11' étant disposés contre le guide d'onde 3, les ondes millimétriques se heurtent à un changement de milieu, éventuellement avec une interface d'air, ce qui introduit des phénomènes de réflexion et de réfraction qui conduisent à des pertes de puissance du signal et à un retour d'onde stationnaire sur l'émetteur qui peut être néfaste.

De plus, le système 1 de transmission d'ondes millimétriques comprend de nombreux éléments distincts et présente donc des difficultés de montage.

Les documents US 2008/238796, US 2015/263403 et US 2015/295305 décrivent des guides d'ondes.

### Résumé

Un objet d'un mode de réalisation est de palier à tout ou partie des inconvénients des systèmes de transmission d'ondes millimétriques existants.

L'invention est définie par les revendications indépendantes. Des modes de réalisation préférés sont spécifiés par les revendications dépendantes.

Un mode de réalisation prévoit un dispositif de transmission d'ondes millimétriques dans lequel les ondes millimétriques ne se heurtent pas à un changement de milieu.

Un mode de réalisation prévoit un dispositif de transmission d'ondes millimétriques compact.

Un mode de réalisation prévoit un dispositif de transmission d'ondes millimétriques s'adaptant aux connecteurs standard de type USB ou HDMI.

Un mode de réalisation prévoit un dispositif de transmission d'ondes millimétriques comprenant un guide d'onde en un matériau dont la constante diélectrique est comprise entre 1 et 4, le guide d'onde étant solidaire à chacune de ses extrémités d'un module électronique noyé dans le matériau du guide d'onde, le module électronique comprenant un circuit d'émission-réception d'ondes millimétriques, une antenne adaptée à émettre et recevoir les ondes millimétriques, un circuit de modulation-démodulation et des conducteurs d'entrée-sortie.

Selon un mode de réalisation, le guide d'onde est en un matériau dont la constante diélectrique est comprise entre 2 et 4.

Selon un mode de réalisation, le guide d'onde est en une matière plastique, notamment du polytétrafluoroéthylène, du polypropylène ou du polystyrène.

Selon un mode de réalisation, le module électronique comprend une carte de circuit imprimé, sur une première face de laquelle reposent le circuit d'émission-réception d'ondes millimétriques et le circuit de modulation-démodulation, et sur une deuxième face de laquelle repose l'antenne.

Selon un mode de réalisation, la carte de circuit imprimé comporte un miroir métallique entre la première face et la deuxième face.

Selon un mode de réalisation, le miroir métallique est espacé de l'antenne d'une longueur égale à une demi-longueur d'onde d'émission de l'antenne.

Selon un mode de réalisation, l'antenne a une longueur de l'ordre de la demi-longueur d'onde des ondes millimétriques.

Selon un mode de réalisation, les ondes millimétriques ont une fréquence comprise entre 30 GHz et 300 GHz.

Selon un mode de réalisation, le guide d'onde est solidaire à chacune de ses extrémités d'un module électronique supplémentaire, le module électronique supplémentaire ayant une antenne adaptée à émettre et recevoir des ondes millimétriques d'une fréquence différente de la longueur d'onde des ondes millimétriques émises et reçues par l'antenne du module électronique.

Un autre mode de réalisation prévoit un système de transmission de données comprenant un émetteur et un récepteur de données numériques, un dispositif de transmission d'ondes millimétriques et deux connecteurs, chaque connecteur étant relié à une extrémité du dispositif.

Un autre mode de réalisation prévoit un procédé de fabrication d'un dispositif de transmission d'ondes millimétriques comprenant les étapes suivantes : injecter à l'état liquide le matériau dont la constante diélectrique est comprise entre 1 et 4 dans un moule contenant le module électronique formant ainsi un bloc moulé ; et fusionner une face du bloc moulé avec une extrémité du guide d'onde.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1, décrite précédemment, est un schéma représentant un système de transmission d'ondes millimétriques ;
la figure 2 est un schéma d'un mode de réalisation d'un dispositif de transmission d'ondes millimétriques ;
la figure 3 est un schéma d'un exemple de module électronique adapté au dispositif de la figure 2 ;
la figure 4 illustre l'utilisation du dispositif de la figure 2 ;
la figure 5 est un schéma d'un autre mode de réalisation d'un dispositif de transmission d'ondes millimétriques ;
la figure 6 illustre une étape d'un mode de réalisation d'un procédé de fabrication d'un dispositif de transmission d'ondes millimétriques ; et
la figure 7 illustre une autre étape du procédé de fabrication d'un dispositif de transmission d'ondes millimétriques.

### Description détaillée

De mêmes éléments ont été désignés par de mêmes références dans les différentes figures et, de plus, les diverses figures ne sont pas tracées à l'échelle. Par souci de clarté, seuls les éléments utiles à la compréhension des modes de réalisation décrits ont été représentés et sont détaillés.

Sauf précision contraire, l'expression "de l'ordre de" signifie à 10 % près, de préférence à 5 % près.

La figure 2 est un schéma illustrant un mode de réalisation d'un dispositif 20 de transmission d'ondes millimétriques. Le dispositif 20 comprend les mêmes éléments que le système de transmission d'ondes millimétriques décrit en figure 1, c'est-à-dire un guide d'onde 3 en matière plastique diélectrique, des antennes 5 et 5', des circuits d'émission-réception (TX/RX) 7 et 7', des circuits de modulation-démodulation (MOD/DEMOD) 9 et 9', et des bornes d'entrée-sortie 13 et 13'.

La constante diélectrique du matériau du guide d'onde 3 est par exemple comprise entre 1 et 4, de préférence comprise entre 2 et 4. L'angle de perte ou tangente delta du matériau du guide d'onde 3 est par exemple inférieur à 10⁻³ pour assurer des pertes minimales du signal dans le guide d'onde 3. Ce matériau peut être une matière plastique diélectrique telle que par exemple du polytétrafluoroéthylène, du polypropylène ou du polystyrène. A titre d'exemple, pour un matériau de constante diélectrique égale à 2 et pour une fréquence comprise entre 30 GHz et 300 GHz, la longueur d'onde de l'onde électromagnétique se propageant dans le guide d'onde 3 est comprise entre 7 mm et 0,7 mm. On pourra par exemple utiliser une onde à une fréquence de l'ordre de 60 GHz, pour laquelle, pour un matériau de constante diélectrique égale à 2, la longueur d'onde est égale à 3,5 mm. La longueur de l'antenne 5, 5' est alors de l'ordre de la longueur d'onde, c'est-à-dire de 3,5 mm. A titre d'exemple, les antennes 5, 5' sont des antennes à bande étroite ou des antennes à bande large.

Le guide d'onde 3 a une dimension latérale égale ou supérieure à la longueur d'onde maximale de l'onde pouvant être émise. Selon un mode de réalisation, dans un plan perpendiculaire à la direction longitudinale du guide d'onde 3, la section droite du guide d'onde est inscrite dans un cercle dont le diamètre est supérieur ou égal à la longueur d'onde maximale de l'onde pouvant être émise et inférieur à deux fois la longueur d'onde maximale de l'onde pouvant être émise. Le guide d'onde 3 est par exemple cylindrique à section droite circulaire et a par exemple un diamètre compris entre 4 mm et 6 mm. Selon un mode de réalisation, la forme du guide d'onde 3 est adaptée à confiner l'onde au centre du guide d'onde afin d'éviter les forts signaux à la surface du guide d'onde, la surface du guide d'onde 3 pouvant être manipulée par un utilisateur. De façon avantageuse, le guide d'onde 3 ne comprend pas d'éléments en un matériau conducteur électriquement. En particulier, la surface extérieure du guide d'onde 3 n'est pas au contact d'un revêtement en un matériau conducteur électriquement. Pour une même application, le guide d'onde 3 réalisé en matière diélectrique présente un coût de fabrication inférieur à celui d'un guide d'onde comprenant des éléments conducteurs électriquement. En outre, pour une même application, le guide d'onde 3 réalisé en matière diélectrique a un poids inférieur à celui d'un guide d'onde comprenant des éléments conducteurs électriquement.

Le guide d'onde 3 est en un premier matériau diélectrique, correspondant à une première matière plastique diélectrique, et est entouré par un deuxième matériau diélectrique. Selon un mode de réalisation, le deuxième matériau diélectrique est l'air. Selon un mode de réalisation, le deuxième matériau diélectrique est une deuxième matière plastique diélectrique, différente de la première matière plastique diélectrique, le guide d'onde 3 pouvant être entouré par une gaine de la deuxième matière plastique diélectrique entourant la première matière plastique diélectrique.

Chacune des antennes 5 et 5' est positionnée sur une première face d'une carte de circuit imprimé 22 et 22'. Les cartes de circuit imprimé sont par exemple formées à partir d'un substrat organique, par exemple de type epoxy. Le circuit d'émission-réception (TX/RX) 7 et le circuit de modulation-démodulation (MOD/DEMOD) 9 sont positionnés sur une seconde face, opposée à la première face, de la carte de circuit imprimé 22 et, de même, le circuit d'émission-réception 7' et le circuit de modulation-démodulation 9' sont positionnés sur une seconde face de la carte de circuit imprimé 22'. Les différents circuits sont interconnectés par des vias et des pistes (non représentés sur la figure 2) formés dans les cartes de circuit imprimé 22 et 22'. Les bornes d'entrée-sortie 13 et 13' sont respectivement reliées aux pistes des cartes de circuit imprimé 22 et 22' par des conducteurs 24 et 24'. L'ensemble formé par la carte de circuit imprimé 22, l'antenne 5, le circuit d'émission-réception 7, le circuit de modulation-démodulation 9, les conducteurs 24 et la borne d'entrée-sortie 13 est appelé par la suite module électronique 26. De même, l'ensemble formé par la carte de circuit imprimé 22', l'antenne 5', le circuit d'émission-réception 7', le circuit de modulation-démodulation 9', les conducteurs 24' et la borne d'entrée-sortie 13' est appelé par la suite module électronique 26'. Le fait que les circuits 7, 9 et que l'antenne 5 soient placés sur des faces opposées du circuit imprimé permet de façon avantageuse que le fonctionnement de l'antenne 5 ne soit pas perturbé par la présence des circuits 7, 9. A titre de variante, les circuits 7 et 9 et l'antenne 5 peuvent être placés sur un même côté de la carte de circuit imprimé 22. Cela permet de réduire les pertes de transmission de signal entre le circuit d'émission-réception 7 et l'antenne 5. Chaque module 26 et 26' est noyé dans un bloc 27, 27' du même matériau que celui du guide d'onde 3, ne laissant dépasser qu'une partie des conducteurs 24 et 24' et les bornes d'entrée-sortie 13, 13'. Chaque bloc 27, 27' est solidaire de l'une des extrémités du guide d'onde 3, ce qui fait du dispositif 20 un dispositif compact. Ainsi les antennes 5 et 5' émettent et reçoivent des ondes millimétriques dans le guide d'onde 3 sans perturbations dues aux passages d'interface. De plus, selon un mode de réalisation, les bornes d'entrée-sortie 13 et 13' n'émettent et ne reçoivent que des signaux binaires et sont des interfaces de connexion avec l'utilisateur, qui n'a pas à traiter directement les ondes millimétriques.

La figure 3 est un schéma représentant une réalisation du module électronique 26. Dans cette figure, de mêmes éléments qu'en figure 2 sont désignés par de mêmes références. Le circuit d'émission-réception 7 et le circuit de modulation-démodulation 9 sont par exemple montés en "flip-chip" sur la carte de circuit imprimé 22. La carte de circuit imprimé 22 comprend en outre des vias et des pistes permettant la connexion des différents circuits 7, 9 et de l'antenne 5. En particulier, un via traversant 28 connecte l'antenne 5 au circuit d'émission-réception 7. Le via traversant 28 ne transportant que des ondes millimétriques, il pourrait se comporter comme une antenne et orienter les ondes millimétriques dans une direction normale au sens de propagation du guide d'onde, ce qui conduirait à des pertes de signal. Ainsi on minimise la longueur du via 28 en minimisant l'épaisseur de la carte de circuit imprimé 22. On choisit par exemple une carte de circuit imprimé 22 dont l'épaisseur est comprise entre quelques centaines de µm et quelques mm, par exemple comprise entre 500 µm et 4 mm. Plus l'épaisseur de la carte de circuit imprimé est petite, moins il y a de pertes du signal. Des pistes 29, 30 connectent le circuit d'émission-réception 7 au circuit de modulation-démodulation 9. Les conducteurs 24 permettent la connexion externe du module électronique 26 mais également l'alimentation des circuits 7, 9 du module électronique 26. De plus, pour améliorer l'efficacité de l'antenne 5, la carte de circuit imprimé 22 peut comprendre un miroir métallique 32, par exemple une couche en métal, typiquement du cuivre, positionné à une distance de l'antenne 5 égale à la demi-longueur d'onde de l'onde émise ou reçue par l'antenne 5. Dans ce cas, la carte de circuit imprimé a une épaisseur supérieure à la demi-longueur d'onde de l'onde émise ou reçue par l'antenne 5, par exemple la valeur de la demi-longueur d'onde augmentée de 500 µm. En reprenant l'exemple cité précédemment, pour une fréquence d'émission de 60 GHz et un matériau composant le guide d'onde de constante diélectrique de 2, la carte de circuit imprimé a une épaisseur de 2,25 mm et le miroir métallique 32 peut être placé à une distance de 1,75 mm de l'antenne 5. Le miroir métallique 32 améliore le bilan de liaison du dispositif 20.

Le module électronique 26' a la même configuration que le module 26.

D'autres circuits peuvent être montés sur la carte de circuit imprimé 22, 22', par exemple des circuits de traitement de signal.

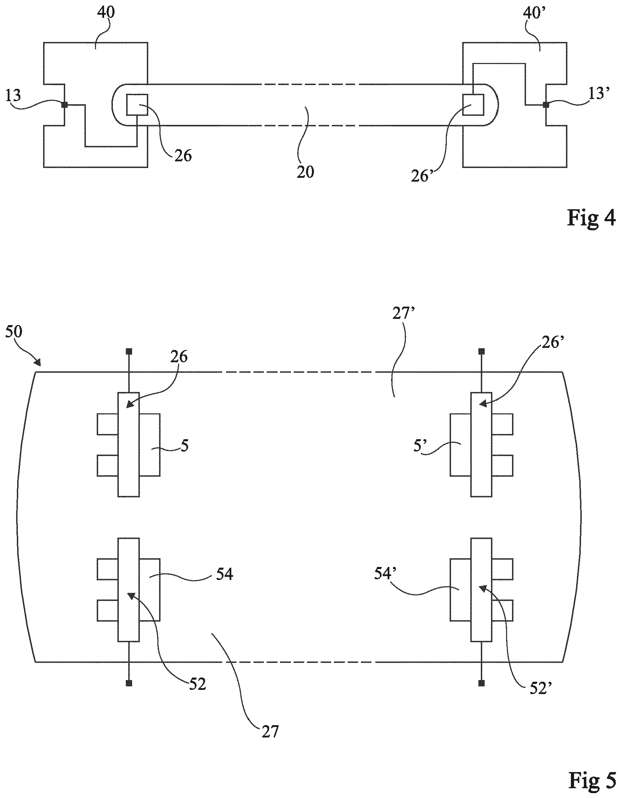

La figure 4 est un schéma illustrant un exemple d'utilisation du dispositif 20 de la figure 2. Selon un mode de réalisation, les bornes d'entrée-sortie 13 et 13' n'émettent et ne reçoivent que des signaux binaires. Il est donc possible de les connecter directement à des connecteurs 40 et 40' standard, mâles ou femelles, tels que par exemple des connecteurs USB ou HDMI. Les connecteurs 40 et 40' peuvent également être des connecteurs non standard de type SPI. Ainsi on obtient une alternative à un câble classique à base de cuivre. Les matières plastiques diélectriques sont, de plus, moins onéreuses que le cuivre et ne transmettent pas les émissions électromagnétiques. Le dispositif 20 est donc adapté aux véhicules terrestres, maritimes ou aériens. Par ailleurs, le guide d'onde 3 utilisé dans le dispositif 20 peut être mis en oeuvre dans une habitation de différentes manières, comme par exemple dans des plinthes murales en matière plastique ou dans des gaines en matière plastique intégrées dans des meubles.

La figure 5 illustre un autre mode de réalisation d'un dispositif 50 de transmission d'ondes millimétriques. Le dispositif 50 comprend l'ensemble des éléments du dispositif 20 décrit en figure 2 et comprend en outre un deuxième couple de modules électroniques 52 et 52'. Le module 52 est noyé dans le même bloc 27 que le module 26 et le module 52' est noyé dans le même bloc 27' que le module 26'. Les modules 52 et 52' ont sensiblement la même structure que les modules 26 et 26' et comprennent notamment des antennes 54 et 54' à la différence que les antennes 54 et 54' émettent et reçoivent des ondes millimétriques dont la fréquence est différente de celle des ondes millimétriques émises et reçues par les antennes 5 et 5' des modules 26 et 26'. De cette façon, le dispositif 50 peut transmettre deux signaux différents simultanément. A titre de variante, les antennes 54 et 54' peuvent également émettre et recevoir des ondes déphasées de *π*/2 et de même fréquence que les ondes millimétriques émises par les antennes 5 et 5'.

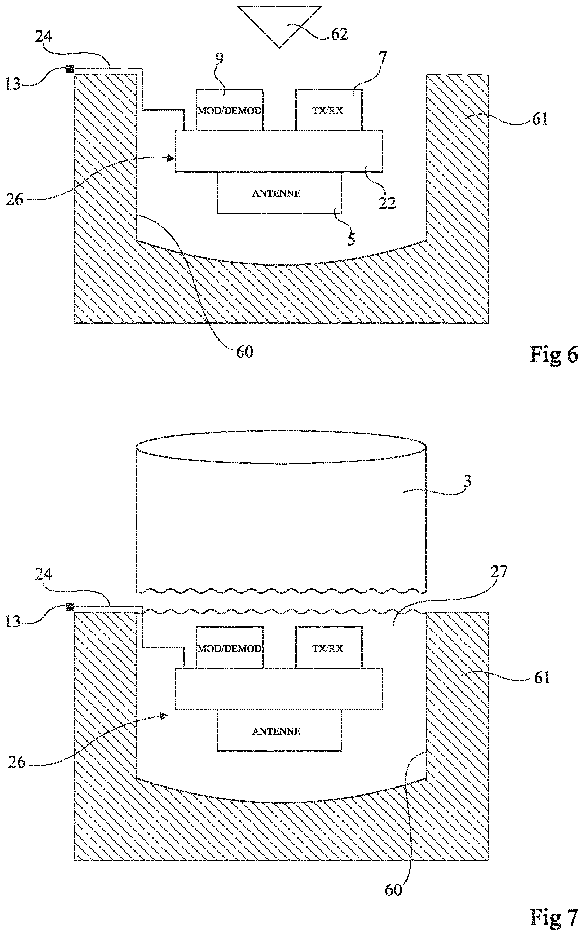

La figure 6 est un schéma représentant une première étape d'un mode de réalisation d'un procédé de fabrication du dispositif de transmission d'ondes millimétriques 20. Le circuit d'émission-réception (TX/RX) 7 et le circuit de modulation-démodulation (MOD/DEMOD) 9 et l'antenne 5 sont montés sur la carte de circuit imprimé 22 pour former le module électronique 26. Le module électronique 26 est positionné dans la cavité interne 60 d'un moule 61. La cavité 60 est adaptée à contenir entièrement le module 26 et à produire par exemple un bloc moulé 27 de mêmes dimensions transversales que le guide d'onde 3. L'ensemble des conducteurs 24 est disposé pour dépasser de la cavité 60 du moule 61. Un injecteur 62 injecte un matériau plastique diélectrique à l'état liquide dans la cavité 60 du moule 61. Une fois la matière plastique diélectrique solidifiée, le module électronique 26 est entièrement noyé dans la matière plastique à l'exception des conducteurs 24 dont une partie est restée apparente. On obtient ainsi le bloc moulé 27.

La figure 7 est un schéma représentant une seconde étape du mode de réalisation du procédé de fabrication du dispositif de transmission d'ondes millimétriques 20 après l'obtention du bloc 27 moulé contenant le module électronique 26. Le bloc moulé 27 peut être laissé dans le moule 61. Une face du bloc moulé 27 et une extrémité du guide d'onde 3 sont chauffées puis fusionnées de façon à n'obtenir qu'une seule pièce en matière plastique diélectrique. Seule une partie des conducteurs 24 est apparente. L'antenne 5 est totalement immergée dans la matière plastique diélectrique et les ondes qu'elle émet ou reçoit ne se heurtent à aucune interface. Les étapes décrites dans les figures 6 et 7 sont répétées une deuxième fois avec le deuxième module électronique 26' à la deuxième extrémité du guide d'onde 3. Le dispositif est alors prêt à l'utilisation. Pour l'utiliser, on peut adapter des connecteurs standard ou non sur les bornes 13 et 13'.

## Revendications

1. Système de transmission d'ondes millimétriques comprenant :
un dispositif (20, 50) de transmission d'ondes millimétriques comprenant un guide d'onde (3) en un matériau dont la constante diélectrique est comprise entre 1 et 4, le guide d'onde (3) étant solidaire à chacune de ses extrémités d'un module électronique (26, 26') noyé dans le matériau du guide d'onde (3), chaque module électronique comprenant un circuit d'émission-réception (7, 7') d'ondes millimétriques, une antenne (5, 5') adaptée à émettre et recevoir les ondes millimétriques, un circuit de modulation-démodulation (9, 9') relié par un conducteur d'entrée-sortie (24, 24') à une borne d'entrée-sortie (13, 13') d'émission et de réception de signaux binaires, le guide d'onde ne comprenant pas d'élément en un matériau conducteur électriquement ; et
deux connecteurs (40, 40'), chaque connecteur étant relié à une extrémité du dispositif (20) et connecté à la borne d'entrée-sortie (13, 13') du module électronique (26, 26') situé à la même extrémité.

2. Système selon la revendication 1, dans lequel le guide d'onde (3) est en un matériau dont la constante diélectrique est comprise entre 2 et 4.

3. Système selon la revendication 1 ou 2, dans lequel le guide d'onde (3) est en une matière plastique, notamment du polytétrafluoroéthylène, du polypropylène ou du polystyrène.

4. Système selon l'une quelconque des revendications 1 à 3, dans lequel le module électronique (26, 26') comprend une carte de circuit imprimé (22, 22'), sur une première face de laquelle reposent le circuit d'émission-réception (7, 7') d'ondes millimétriques et le circuit de modulation-démodulation (9, 9'), et sur une deuxième face de laquelle repose l'antenne (5, 5'), la deuxième face étant opposée à la première face.

5. Système selon la revendication 4, dans lequel la carte de circuit imprimé comporte un miroir métallique (32) entre la première face et la deuxième face.

6. Système selon la revendication 5, dans lequel le miroir métallique (32) est espacé de l'antenne (5, 5') d'une longueur égale à une demi-longueur d'onde d'émission de l'antenne (5, 5').

7. Système selon l'une quelconque des revendications 1 à 6, dans lequel l'antenne (5, 5') a une longueur de l'ordre de la demi-longueur d'onde des ondes millimétriques.

8. Système selon l'une quelconque des revendications 1 à 7, dans lequel les ondes millimétriques ont une fréquence comprise entre 30 GHz et 300 GHz.

9. Système selon l'une quelconque des revendications 1 à 8, dans lequel le guide d'onde (3) est solidaire à chacune de ses extrémités d'un module électronique supplémentaire (52, 52'), le module électronique supplémentaire ayant une antenne (54, 54') adaptée à émettre et recevoir des ondes millimétriques d'une fréquence différente de la longueur d'onde des ondes millimétriques émises et reçues par l'antenne (5, 5') du module électronique (26, 26').

10. Système selon l'une quelconque des revendications 1 à 9 comprenant en outre un émetteur et un récepteur de données numériques.

11. Procédé de fabrication d'un système de transmission (20) d'ondes millimétriques selon l'une quelconque des revendications 1 à 10 comprenant les étapes suivantes :
injecter à l'état liquide le matériau dont la constante diélectrique est comprise entre 1 et 4 dans un moule (61) contenant le module électronique (26, 26') formant ainsi un bloc moulé (27, 27') ; et
fusionner une face du bloc moulé (27, 27') avec une extrémité du guide d'onde (3).

## Patentansprüche

1. Ein Millimeterwellenübertragungssystem, das Folgendes aufweist:
eine Millimeterwellenübertragungsvorrichtung (20, 50), die einen Wellenleiter (3) aus einem Material mit einer Dielektrizitätskonstante im Bereich von 1 bis 4 aufweist, wobei der Wellenleiter (3) an jedem seiner Enden mit einer in das Material des Wellenleiters (3) eingebetteten elektronischen Einheit (26, 26') fest ist, wobei jede elektronische Einheit eine Millimeterwellen-Sendeempfängerschaltung (7, 7'), eine Antenne (5, 5'), die geeignet ist, die Millimeterwellen zu senden und zu empfangen, und eine Modulationsdemodulationsschaltung (9, 9'), die durch einen Eingangs-Ausgangsleiter (24, 24') mit einem Eingangs-Ausgangsanschluss (13, 13') zum Emittieren und Empfangen von binären Signalen verbunden ist, aufweist, wobei der Wellenleiter kein Element aus einem elektrisch leitfähigen Material aufweist; und
zwei Verbinder (40, 40'), wobei jeder Verbinder mit einem Ende der Vorrichtung (20) verbunden und mit dem Eingangs-Ausgangsanschluss (13, 13') der elektronischen Einheit (26, 26') verbunden ist, die sich am gleichen Ende befindet.

2. System nach Anspruch 1, wobei der Wellenleiter (3) aus einem Material mit einer Dielektrizitätskonstante im Bereich von 2 bis 4 hergestellt ist.

3. System nach Anspruch 1 oder 2, wobei der Wellenleiter (3) aus einem Kunststoffmaterial, insbesondere Polytetrafluorethylen, Polypropylen oder Polystyrol, hergestellt ist.

4. System nach einem der Ansprüche 1 bis 3, wobei die elektronische Einheit (26, 26') eine gedruckte Leiterplatte (22, 22') mit der Millimeterbereichs-Sendeempfängerschaltung (7, 7') und der Modulationsdemodulationsschaltung (9, 9') aufweist, die auf einer ersten Oberfläche davon aufliegt, und mit der Antenne (5, 5'), die auf einer zweiten Oberfläche davon aufliegt, wobei die zweite Oberfläche der ersten Oberfläche gegenüberliegt.

5. System nach Anspruch 4, wobei die gedruckte Leiterplatte einen Metallspiegel (32) zwischen der ersten Oberfläche und der zweiten Oberfläche aufweist.

6. System nach Anspruch 5, wobei der Metallspiegel (32) von der Antenne (5, 5') um eine Länge beabstandet ist, die gleich einer halben Sendewellenlänge der Antenne (5, 5') ist.

7. System nach einem der Ansprüche 1 bis 6, wobei die Antenne (5, 5') eine Länge in der Größenordnung der halben Wellenlänge der Millimeterwellen aufweist.

8. System nach einem der Ansprüche 1 bis 7, wobei die Millimeterwellen eine Frequenz im Bereich von 30 GHz bis 300 GHz aufweisen.

9. System nach einem der Ansprüche 1 bis 8, wobei der Wellenleiter (3) an jedem seiner Enden mit einer zusätzlichen elektronischen Einheit (52, 52') fest ist, wobei die zusätzliche elektronische Einheit eine Antenne (54, 54') aufweist, die geeignet ist, Millimeterwellen mit einer Frequenz zu senden und zu empfangen, die sich von der Wellenlänge der von der Antenne (5, 5') der elektronischen Einheit (26, 26') gesendeten und empfangenen Millimeterwellen unterscheidet.

10. System nach einem der Ansprüche 1 bis 9, das ferner einen digitalen Datensender und einen -empfänger aufweist.

11. Verfahren zur Herstellung des Millimeterwellenübertragungssystems (20) nach einem der Ansprüche 1 bis 10, das folgende Schritte aufweist:
Einspritzen des Materials mit einer Dielektrizitätskonstante im Bereich von 1 bis 4 in einem flüssigen Zustand in eine Form (61), die die elektronische Einheit (26, 26') enthält, um so einen geformten Block (27, 27') auszubilden; und
Verschmelzen einer Oberfläche des geformten Blocks (27, 27') mit einem Ende des Wellenleiters (3).

## Claims

1. A millimeter-wave transmission system comprising:
a millimeter-wave transmission device (20, 50) comprising a waveguide (3) made of a material having a dielectric constant in the range from 1 to 4, the waveguide (3) being solid at each of its ends with an electronic unit (26, 26') embedded in the material of the waveguide (3), each electronic unit comprising a millimeter wave transceiver circuit (7, 7'), an antenna (5, 5') capable of transmitting and receiving the millimeter waves, a modulation-demodulation circuit (9, 9') linked by an input-output conductor (24, 24') to an input-output terminal (13, 13') for emitting and receiving binary signals, the waveguide comprising no element made of an electrically-conductive material; and
two connectors (40, 40'), each connector being connected to one end of the device (20) and connected to the input-output terminal (13, 13') of the electronic unit (26, 26') located at the same end.

2. The system of claim 1, wherein the waveguide (3) is made of a material having a dielectric constant in the range from 2 to 4.

3. The system of claim 1 or 2, wherein the waveguide (3) is made of a plastic material, particularly polytetrafluoroethylene, polypropylene, or polystyrene.

4. The system of any of claims 1 to 3, wherein the electronic unit (26, 26') comprises a printed circuit board (22, 22'), having the millimeter-range transceiver circuit (7, 7') and the modulation-demodulation circuit (9, 9') resting on a first surface thereof, and having the antenna (5, 5') resting on a second surface thereof, the second surface being opposite to the first surface.

5. The system of claim 4, wherein the printed circuit board comprises a metal mirror (32) between the first surface and the second surface.

6. The system of claim 5, wherein the metal mirror (32) is spaced apart from the antenna (5, 5') by a length equal to a half transmission wavelength of the antenna (5, 5').

7. The system of any of claims 1 to 6, wherein the antenna (5, 5') has a length in the order of the half wavelength of the millimeter waves.

8. The system of any of claims 1 to 7, wherein the millimeter waves have a frequency in the range from 30 GHz to 300 GHz.

9. The system of any of claims 1 to 8, wherein the waveguide (3) is solid at each of its ends with an additional electronic unit (52, 52'), the additional electronic unit having an antenna (54, 54') capable of transmitting and receiving millimeter waves having a frequency different from the wavelength of the millimeter waves transmitted and received by the antenna (5, 5') of the electronic unit (26, 26').

10. The system of any of claims 1 to 9, further comprising a digital data transmitter and a receiver.

11. A method of manufacturing the millimeterwave transmission system (20) of any of claims 1 to 10, comprising the steps of:
injecting in the liquid state the material having a dielectric constant in the range from 1 to 4 into a mold (61) containing the electronic unit (26, 26') thus forming a molded block (27, 27'); and
fusing a surface of the molded block (27, 27') with an end of the waveguide (3).
